(19) Europäisches Patentamt
European Patent Office
Office européen des brevets

(11) **EP 3 510 461 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(21) Anmeldenummer: **17740294.8**

(22) Anmeldetag: **14.07.2017**

(51) Int Cl.:
***G05D 1/02*** *(2020.01)*

(86) Internationale Anmeldenummer:
**PCT/EP2017/025209**

(87) Internationale Veröffentlichungsnummer:
**WO 2018/046134 (15.03.2018 Gazette 2018/11)**

(54) **VERFAHREN UND SYSTEM ZUR POSITIONSERFASSUNG**

METHOD AND SYSTEM FOR POSITION CAPTURE

PROCÉDÉ ET SYSTÈME DE DÉTECTION DE POSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2016 DE 102016010878**

(43) Veröffentlichungstag der Anmeldung:
**17.07.2019 Patentblatt 2019/29**

(73) Patentinhaber: **SEW-EURODRIVE GmbH & Co. KG 76646 Bruchsal (DE)**

(72) Erfinder:
• **SCHMIDT, Josef**
  **76676 Graben-Neudorf (DE)**
• **BÖCKLE, Jürgen**
  **76646 Bruchsal (DE)**
• **HUA, Zhidong**
  **76646 Bruchsal (DE)**
• **SCHÄFER, Thomas**
  **76689 Neuthard (DE)**
• **WANJEK, Andreas**
  **68753 Waghäusel (DE)**

(56) Entgegenhaltungen:
**WO-A1-91/09356    DE-A1- 4 312 434
US-A- 3 008 532**

**Beschreibung**

Die Erfindung betrifft ein Verfahren und ein System zur Positionserfassung.

Aus der DE 10 2005 008 555 A1 sind eine Anlage und ein Verfahren zur Bestimmung einer Position bekannt.

Aus der WO 2014 / 065 856 A1 ist als nächstliegender Stand der Technik eine Fahrzeuglokalisierung mit bodengängigem Radar bekannt.

Aus der US 2010 / 0052971 A1 ist ein Radarbasiertes Detektieren einer Fahrbahn bekannt.

Aus der DE 10 2013 001 358 A1 ist ein Verfahren zum Betrieben einer Anlage mit Lichtkommunikation bekannt.

Aus der DE 100 08 289 A1 ist ein Verfahren zur Bestimmung der Ausrichtung eines Mobilteils bekannt.

Aus der WO 91/09356 A1 ist als nächstliegender Stand der Technik ein System zur Positionserfassung eines Fahrzeugs bekannt.

Der Erfindung liegt daher die Aufgabe zugrunde, ein Verfahren und ein System zur Positionserfassung weiterzubilden, wobei der Umweltschutz verbessert werden soll.

Erfindungsgemäß wird die Aufgabe bei dem Verfahren nach den in Anspruch 1 angegebenen Merkmalen und bei dem System nach den in Anspruch 6 angegebenen Merkmalen gelöst.

Wichtige Merkmale der Erfindung bei dem Verfahren zur Positionserfassung eines Fahrzeugs entlang einer Fahrstrecke, wobei die Fahrstrecke auf einem Betonboden angeordnet ist, wobei der Betonboden eine Armierung aufweist,

sind, dass das Verfahren die zeitlich aufeinander folgenden Verfahrensschritte aufweist:

wobei in einem ersten Verfahrensschritt das Fahrzeug eine Referenzfahrt entlang der Fahrstrecke ausführt, wobei das Fahrzeug entlang der Fahrstrecke Messpunkte aufnimmt, wobei jeder Messpunkt einer Position auf der Fahrstrecke ein Signal der Armierung zuordnet,

wobei in einem zweiten Verfahrensschritt aus den während der Referenzfahrt ermittelten Messpunkten ein Referenzprofil der Fahrstrecke bestimmt wird,

wobei in einem dritten Verfahrensschritt das Fahrzeug entlang der Fahrstrecke fährt und weitere Messpunkte aufnimmt,

wobei in einem vierten Verfahrensschritt aus den weiteren Messpunkten ein Profilabschnitt bestimmt wird,

wobei in einem fünften Verfahrensschritt der Profilabschnitt einem Abschnitt des Referenzprofils eindeutig zugeordnet wird, insbesondere mittels eines Korrelationsverfahrens,

wobei in einem sechsten Verfahrensschritt mittels des dem Referenzprofil zugeordneten Profilabschnitts dem Fahrzeug eine Position auf der Fahrstrecke eindeutig zugeordnet wird.

Von Vorteil ist dabei, dass die Position des Fahrzeugs auf der Fahrstrecke bestimmbar ist. Vorteilhafterweise ist dazu die Armierung im Betonboden verwendbar, die der Betonboden einer Anlage, insbesondere einer Fabrikhalle, üblicherweise aufweist. Somit ist lediglich das Fahrzeug mit einem Sensor zur Erfassung der Messpunkte und einem Auswertemittel zur Auswertung der Messpunkte auszurüsten. Eine sichere Bestimmung der Position des Fahrzeugs auf der Fahrstrecke ist somit mit geringem Materialaufwand ausführbar. Insbesondere wird der Profilabschnitt dem Abschnitt des Referenzprofils eindeutig zugeordnet mittels eines Korrelationsverfahrens. Hierbei wird also das Integral aus dem Produkt zwischen dem Profilabschnitt und dem relativ dazu um einen Verschiebebetrag verschobenen Abschnitt des Referenzprofils bestimmt. Der Wert des Integrals hängt somit vom Verschiebebetrag ab. Durch Bestimmung desjenigen Verschiebebetrags, bei welchem der Wert des Integrals maximal ist, ist die eindeutige Zuordnung in einfacher Weise ausführbar. Ein Auswertemittel des Fahrzeugs ist für diese Zuordnung durch Bestimmung des Maximums eines Korrelationsintegrals geeignet ausgeführt.

Bei einer vorteilhaften Ausgestaltung wird im sechsten Verfahrensschritt dem Profilabschnitt ein Positionsbereich des Referenzprofils zugeordnet, wobei die Position des Fahrzeugs relativ zum Profilabschnitt bestimmt wird, wobei aus dem Positionsbereich und der Position des Fahrzeugs relativ zum Profilabschnitt die Position des Fahrzeugs auf der Fahrstrecke bestimmt wird. Von Vorteil ist dabei, dass die Position des Fahrzeugs eindeutig bestimmbar ist.

Bei einer vorteilhaften Ausgestaltung wird zur Bestimmung des Signals der Armierung mittels einer Radarmessung und/oder eines induktiven Sensors die Tiefe und/oder Dichte und/oder Dicke der Armierung im Betonboden bestimmt. Von Vorteil ist dabei, dass die im Betonboden üblicherweise vorhandene Armierung zur Bestimmung der Position des Fahrzeugs auf der Fahrstrecke verwendbar ist. Vorteilhafterweise ist die Armierung unregelmäßig in dem Betonboden angeordnet, insbesondere wobei die Armierung mehrere Armierungsabschnitte aufweist, die teilweise überlappen. Somit weist die Fahrstrecke ein charakteristisches Referenzprofil auf, so dass eine Abweichung des Fahrzeugs von der Fahrstrecke detektierbar ist.

Bei einer vorteilhaften Ausgestaltung ordnet das Referenzprofil jeder Position auf der Fahrstrecke einen Wert des Signals der Armierung eindeutig zu. Von Vorteil ist dabei, dass die Position des Fahrzeugs auf der Fahrstrecke mittels des Referenzprofils bestimmbar ist.

Bei einer vorteilhaften Ausgestaltung wird die Ausrichtung des Fahrzeugs relativ zur Erstreckungsrichtung der Fahrstrecke an einer Position bestimmt, wobei in einer ersten Messung, linear polarisiertes Licht eines stationär angeordneten Sendemoduls einen Flüssigkristall durchläuft, wobei dieser derart angesteuert wird, dass die Polarisation des Lichtes um einen ersten Winkel gedreht wird, wobei das Licht zumindest teilweise ein zweites Polarisationsfilter des Fahrzeugs passiert und die Intensität $I_1$ des Lichts bestimmt wird, wobei in einer zweiten Messung, linear polarisiertes Licht des stationär angeordneten Sendemoduls den Flüssigkristall durchläuft, wobei dieser derart angesteuert wird, dass die Polarisation des Lichtes um einen zweiten Winkel gedreht wird, wobei das Licht zumindest teilweise das zweite Polarisationsfilter passiert und die Intensität $I_2$ des Lichts bestimmt wird, wobei aus den Intensitäten $I_1$ und $I_2$ die Ausrichtung des Fahrzeugs relativ zur Erstreckungsrichtung der Fahrstrecke bestimmt wird, wobei der erste Winkel und der zweite Winkel ungleich sind, insbesondere wobei der erste Winkel und der zweite Winkel sich betragsmäßig um 90° unterscheiden oder sich betragsmäßig um einen Wert zwischen 80° und 100° unterscheiden. Von Vorteil ist dabei, dass das mittels der aktuellen Ausrichtung die Fahrtrichtung des Fahrzeuges korrigierbar ist, bevor das Fahrzeug von der Fahrstrecke abweicht. Somit ist eine sichere Steuerung des Fahrzeugs ermöglicht.

Wichtige Merkmale der Erfindung bei dem System zur Positionserfassung eines Fahrzeugs entlang einer Fahrstrecke, insbesondere mittels eines Verfahrens zur Positionserfassung wie zuvor beschrieben beziehungsweise nach mindestens einem der auf das Verfahren gerichteten Ansprüche, sind, dass

das System das Fahrzeug, die Fahrstrecke und einen Betonboden aufweist, wobei die Fahrstrecke auf dem Betonboden angeordnet ist,

wobei der Betonboden eine Armierung aufweist,

wobei das Fahrzeug einen Sensor zur Messung eines Signals der Armierung und ein Auswertemittel aufweist.

Von Vorteil ist dabei, dass die Position des Fahrzeugs auf der Fahrstrecke bestimmbar ist. Vorteilhafterweise ist dazu die Armierung im Betonboden verwendbar, die der Betonboden einer Anlage, insbesondere einer Fabrikhalle, üblicherweise aufweist. Somit ist lediglich das Fahrzeug mit dem Sensor zur Erfassung der Messpunkte und dem Auswertemittel zur Auswertung der Messpunkte auszurüsten. Eine sichere Bestimmung der Position des Fahrzeugs auf der Fahrstrecke ist somit mit geringem Materialaufwand ausführbar.

Bei einer vorteilhaften Ausgestaltung ist der Sensor an einem Fahrzeugboden des Fahrzeugs angeordnet. Von Vorteil ist dabei, dass der Abstand zwischen dem Fahrzeug und dem Betonboden kleiner ist, als bei einer Anordnung des Sensors an anderen Positionen auf dem Fahrzeug. Somit ist ein gutes Signal-Rausch-Verhältnis bei der Bestimmung des Signals von der Armierung erreichbar. Vorteilhafterweise ist zwischen dem Sensor und dem Betonboden ausschließlich Luft angeordnet.

Bei einer vorteilhaften Ausgestaltung ist der Sensor mit dem Auswertemittel verbunden, insbesondere elektrisch leitend verbunden. Von Vorteil ist dabei, dass das Auswertemittel zur Auswertung der Signale des Sensors eingerichtet ist.

Bei einer vorteilhaften Ausgestaltung ist der Sensor ein Radarsensor und/oder ein induktiver Sensor, der dazu eingerichtet ist die Dicke und/oder die Dichte und/oder die Tiefe der Armierung im Betonboden zu bestimmen. Von Vorteil ist dabei, dass mittels des Sensors das charakteristische Referenzprofil der Armierung auf der Fahrstrecke bestimmbar ist.

Bei einer vorteilhaften Ausgestaltung weist das Fahrzeug eine Fahrzeugsteuerung auf, insbesondere wobei das Fahrzeug als fahrerloses Transportfahrzeug ausgeführt ist, wobei die Fahrzeugsteuerung mit dem Auswertemittel verbunden ist. Von Vorteil ist dabei, dass die Signale der Armierung von dem Fahrzeug auswertbar sind und daraus die Position des Fahrzeugs von dem Fahrzeug bestimmbar ist und diese Position zur autonomen Steuerung des Fahrzeugs verwendbar ist.

**Erfindungsgemäß** weist das System stationär angeordnete Sendemodule auf, die entlang der Fahrstrecke angeordnet sind, insbesondere die oberhalb des Fahrzeuges angeordnet sind, wobei das Fahrzeug ein Empfangsmodul aufweist, insbesondere wobei das Empfangsmodul an der Oberseite des Fahrzeugs angeordnet ist, wobei jedes Sendemodul eine Lichtquelle, insbesondere eine Leuchtdiode, und ein erstes Polarisationsfilter aufweist, wobei das erste Polarisationsfilter als lineares Polarisationsfilter ausgeführt ist, so dass linear polarisiertes Licht vom Sendemodul aussendbar ist, wobei das Empfangsmodul einen Lichtsensor, einen Flüssigkristall, ein Steuerungsmittel für den Flüssigkristall und einen zweiten Polarisationsfilter aufweist, wobei das zweite Polarisationsfilter als lineares Polarisationsfilter ausgeführt ist, wobei das zweite Polarisationsfilter zwischen dem Lichtsensor und dem Flüssigkristall angeordnet ist, wobei der Flüssigkristall mittels des Steuerungsmittels derart ansteuerbar ist, dass die Polarisation von dem den Flüssigkristall passierenden linear polarisierten Licht um einen ersten Winkel oder um einen zweiten Winkel, insbesondere um 0° oder um 90°, gedreht wird, wobei der erste Winkel und der zweite Winkel ungleich sind, wobei Licht von der Lichtquelle, welches das erste Polarisationsfilter, dann den Flüssigkristall und dann das zweite Polarisationsfilter durchlaufen hat, mittels des Lichtsensors detektierbar ist. Von Vorteil ist dabei, dass das mittels der aktuellen Ausrichtung die Fahrtrichtung des Fahrzeuges korrigierbar ist, bevor das Fahrzeug von der Fahrstrecke abweicht. Somit ist eine sichere Steuerung des Fahrzeugs ermöglicht.

Bei einer vorteilhaften Ausgestaltung erzeugt die Lichtquelle intensitätsmoduliertes Licht, insbesondere mit einer Frequenz zwischen 100 kHz und 10 MHz. Von Vorteil ist dabei, dass eine Identitätsinformation des Sendemoduls und/oder ein Steuerbefehl und/oder eine Statusinformation auf das Licht aufmodulierbar ist. Vorteilhafterweise ist eine hohe Datenübertragungsrate ermöglicht. Die Modulation des Lichtes ist für das menschliche Auge nicht erkennbar.

Bei einer vorteilhaften Ausgestaltung ist das verwendete Licht sichtbares Licht oder Infrarotlicht. Von Vorteil ist dabei, dass das Licht zur Beleuchtung der Fahrstrecke verwendbar ist. Vorteilhafterweise sind einfache Lichtsensoren verwendbar, beispielsweise eine Photodiode oder ein Phototransistor. Vorteilhafterweise sind einfache Lichtquellen verwendbar, beispielsweise eine Leuchtdiode.

Bei einer vorteilhaften Ausgestaltung weist das Empfangsmodul einen Empfänger auf, der mit dem Auswertemittel verbunden ist, wobei der Empfänger eingerichtet ist, ein Signal des Lichtsensors, insbesondere einen Strom, zu messen, wobei das Auswertemittel eingerichtet ist, aus zwei Messwerten des Lichtsensors die Ausrichtung des Fahrzeugs relativ zur Erstreckungsrichtung der Fahrstrecke zu bestimmen, insbesondere wobei die Fahrzeugsteuerung eingerichtet ist, die von dem Auswertemittel bestimmte Ausrichtung des Fahrzeugs zur Steuerung des Fahrzeugs zu verwenden. Von Vorteil ist dabei, dass das Fahrzeug autonom steuerbar ist.

Bei einer vorteilhaften Ausgestaltung weist jedes stationär angeordnete Sendemodul eine Identitätsinformation auf, die auf das Licht des jeweiligen stationär angeordneten

Sendemoduls aufmodulierbar ist, wobei jedem stationär angeordneten Sendemodul ein Positionsbereich entlang der Fahrstrecke eindeutig zuordenbar ist mittels der Identitätsinformation, insbesondere wobei das System eine Speichereinheit aufweist, in der die jeweiligen Positionsbereiche der jeweiligen Identitätsinformation zugeordnet gespeichert sind, wobei die Speichereinheit auslesbar ist von dem jeweiligen Auswertemittel. Von Vorteil ist dabei, dass dem Fahrzeug die Ausrichtung und der Positionsbereich eindeutig zuordenbar sind. Somit ist eine redundante Positionsbestimmung des Fahrzeugs ausführbar. Vorteilhafterweise ist die punktgenaue Positionsbestimmung mittels der Signale der Armierung von der Bestimmung von Positionsbereichen überwachbar. Sobald eine Abweichung zwischen der punktgenauen Position von dem Positionsbereich auftritt ist eine Sicherheitsaktion ausführbar, beispielsweise ist das Fahrzeug stoppbar.

Bei einer vorteilhaften Ausgestaltung weist jedes stationär angeordnete Sendemodul einen jeweiligen Sendekegel auf. Von Vorteil ist dabei, dass dem Fahrzeug der Positionsbereich eines jeweiligen stationär angeordneten Sendemoduls eindeutig zuordenbar ist, sobald das Fahrzeug sich in dem jeweiligen Sendekegel des jeweiligen stationär angeordneten Sendemoduls aufhält und dessen Licht detektiert.

Bei einer vorteilhaften Ausgestaltung überlappen die Sendekegel von benachbarten stationär angeordneten Sendemodulen zumindest teilweise. Von Vorteil ist dabei, dass bei der Positionsbestimmung die Ortsauflösung verbessert ist. Vorteilhafterweise befindet sich das Fahrzeug in einem ersten Positionsbereich im Sendekegel eines ersten stationär angeordneten Sendemoduls oder in einem zweiten Positionsbereich im Sendekegel eines zweiten stationär angeordneten Sendemoduls oder in einem dritten Positionsbereich im Sendekegel des ersten stationär angeordneten Sendemoduls und im Sendekegel des zweiten stationär angeordneten Sendemoduls, wobei das erste stationär angeordnete Sendemodul und das zweite stationär angeordnete Sendemodul benachbart sind. Vorteilhafterweise sind der erste Positionsbereich, der zweite Positionsbereich und der dritte Positionsbereich kleiner als der einem jeweiligen stationär angeordneten Sendemodul zugeordnete Positionsbereich. Dabei ist der dritte Positionsbereich die Schnittmenge aus dem Positionsbereich des ersten stationär angeordneten Sendemoduls und dem Positionsbereich des zweiten stationär angeordneten Sendemoduls.

Bei einer vorteilhaften Ausgestaltung ist die gesamte Fahrstrecke mittels der stationär angeordneten Sendemodule beleuchtet, insbesondere als Beleuchtung der Fahrstrecke. Von Vorteil ist dabei, dass dem Fahrzeug auf der gesamten Fahrstrecke ein Positionsbereich mittels des Systems zuordenbar ist.

Bei einer vorteilhaften Ausgestaltung weist das System ein dem jeweiligen stationär angeordneten Sendemodul zugeordnetes jeweiliges stationär angeordnetes Empfangsmodul auf, wobei das stationär angeordnete Empfangsmodul und das Empfangsmodul des Fahrzeugs gleichartig sind, wobei das Fahrzeug ein Sendemodul aufweist, wobei das Sendemodul des Fahrzeugs und das stationär angeordnete Sendemodul gleichartig sind, wobei das stationär angeordnete Empfangsmodul eingerichtet ist, Licht des Sendemoduls des Fahrzeugs zu empfangen. Von Vorteil ist dabei, dass mittels des stationären Empfangsmoduls und des Sendemoduls auf dem Fahrzeug eine redundante Bestimmung der Ausrichtung des Fahrzeugs ermöglicht ist. Somit ist ein eventueller Messfehler bei der Bestimmung der Ausrichtung durch Mittelwertbildung reduzierbar. Die Sicherheit ist verbessert.

Bei einer vorteilhaften Ausgestaltung ist mittels der Sendemodule und Empfangsmodule eine bidirektionale Datenübertragung zwischen dem Fahrzeug und einer zentralen Steuerung ausführbar. Von Vorteil ist dabei, dass das System zur Kommunikation der Steuerung mit dem Fahrzeug verwendbar ist. Vorteilhafterweise sind Steuerbefehle von der Steuerung an das Fahrzeug und Statusinformationen vom Fahrzeug an die Steuerung übertragbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

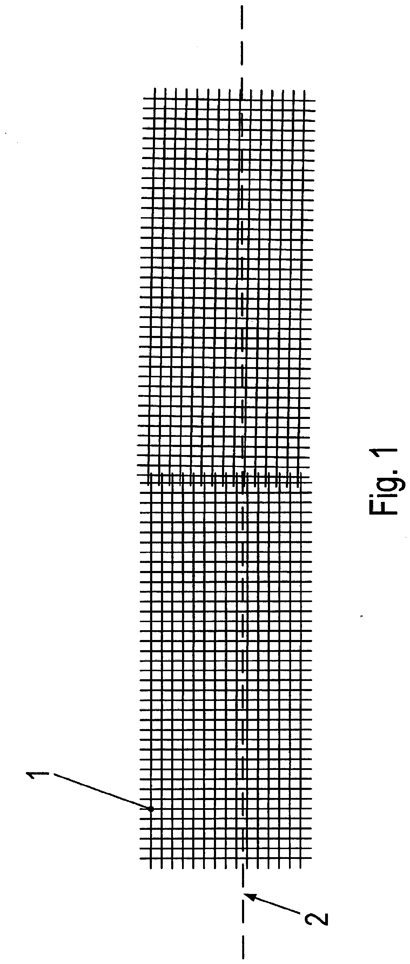

In der Figur 1 ist eine Armierung 1 für einen Betonboden in Draufsicht gezeichnet.

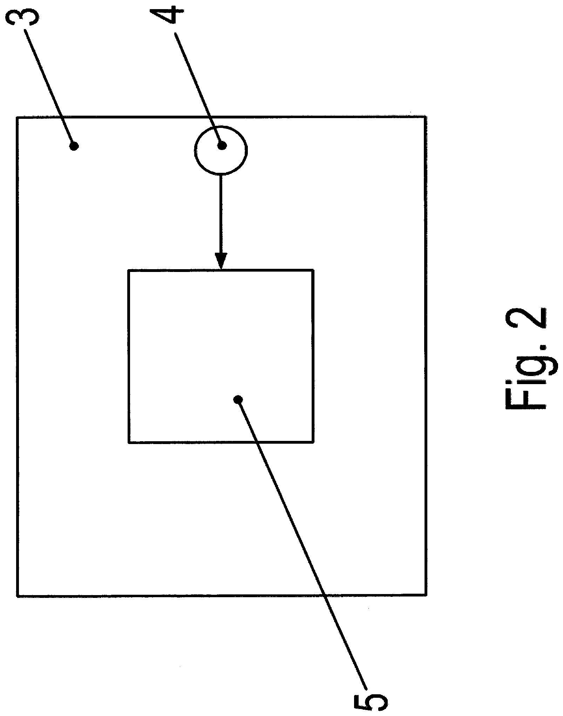

Figur 2 zeigt ein Fahrzeug 3 des erfindungsgemäßen Systems zur Positionserfassung in Draufsicht.

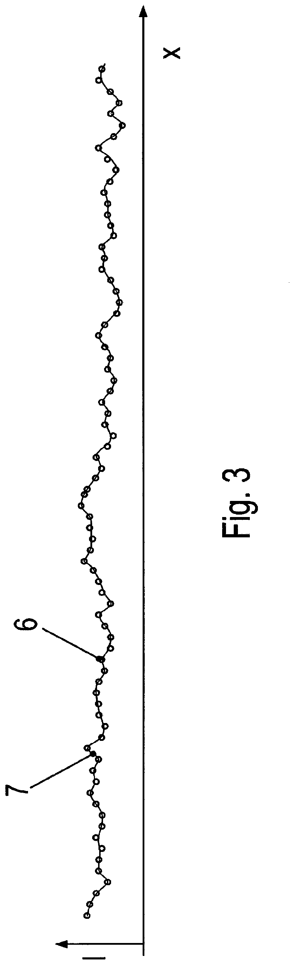

In der Figur 3 ist die Intensität I eines Messsignals der Armierung im Betonboden als Funktion einer Position x auf einer Fahrstrecke mittels Messpunkten 6 und ein aus den Messpunkten 6 resultierendes Profil 7 dargestellt.

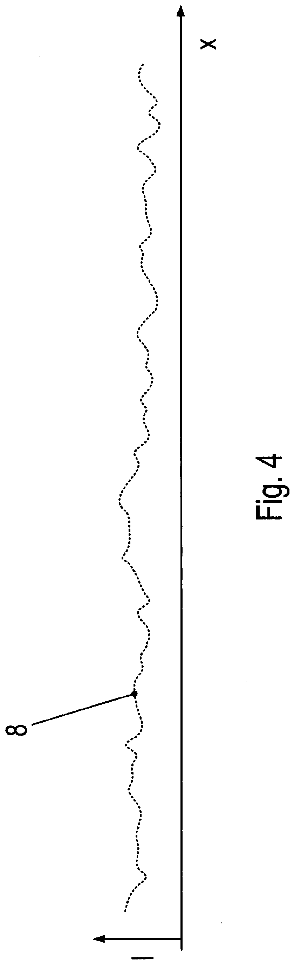

Figur 4 zeigt die Intensität I eines Referenzprofils 8 als Funktion der Position x.

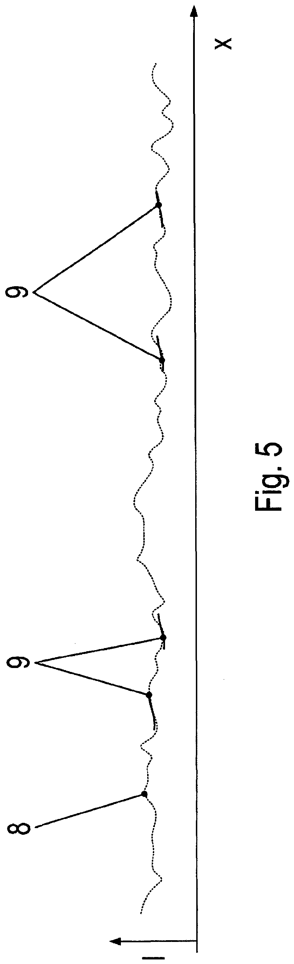

In der Figur 5 sind das Referenzprofil 8 und ein Profilabschnitt 9 gezeichnet, wobei der Profilabschnitt 9 verschiedenen Positionsbereichen des Referenzprofils 8 zuordenbar ist.

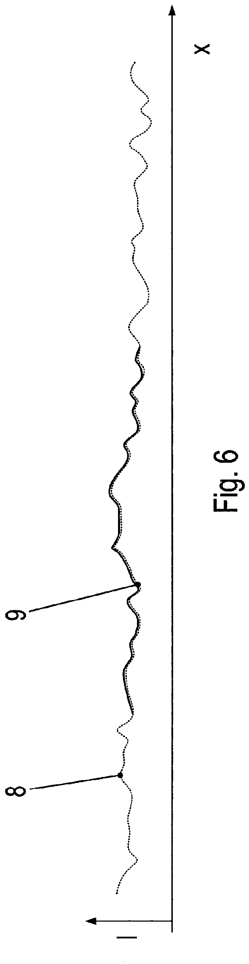

Figur 6 zeigt das Referenzprofil 8 und einen einem Positionsbereich des Referenzprofils 8 eindeutig, insbesondere eineindeutig, zugeordneten Profilabschnitt 9.

Das erfindungsgemäße System zur Positionserfassung weist das Fahrzeug 3 und den Betonboden auf, wobei das Fahrzeug 3 auf dem Betonboden verfahrbar ist.

Der Betonboden weist eine Armierung 1 auf zur Bewehrung des Betonbodens. Die Armierung 1 ist metallisch und weist eine größere Duktilität auf als Beton. Vorzugsweise ist die Armierung 1 aus Stahl, insbesondere Betonstahl, ausgeführt. Als Armierung 1 sind Betonstabstahl und/oder Betonstahlmatten und/oder Betonstahl in Ringen und/oder Bewehrungsdraht und/oder Gitterträger verwendbar.

Die Armierung 1 im Betonboden ist mittels eines Radarsensors und/oder mittels eines induktiven Sensors detektierbar. Die Intensität I des Signals von der Armierung 1 ist dabei abhängig von der Tiefe der Armierung 1 im Betonboden und von der Dicke der Armierung 1 am Ort der Messung. Beispielsweise bewirkt ein Knotenpunkt von zwei Betonstabstählen ein größeres Signal als ein einzelner Betonstabstahl.

Die Armierung 1 weist mehrere Armierungsabschnitte, insbesondere Betonstahlmatten, auf, die nebeneinander angeordnet sind und einander teilweise überlappen. Vorzugsweise sind zwei benachbarte Armierungsabschnitte um einen nichtverschwindenden Winkel verdreht zueinander angeordnet.

Das Fahrzeug 3 weist einen Sensor 4, insbesondere einen induktiven Sensor und/oder einen Radarsensor, auf zur Erfassung der Armierung 1 im Betonboden. Vorzugsweise ist der Sensor 4 am Fahrzeugboden des Fahrzeugs 3 angeordnet und zum Betonboden hin ausgerichtet. Der Sensor 4 ist mit einem Auswertemittel 5 verbunden, das auf dem Fahrzeug 3 angeordnet ist.

Das Fahrzeug 3, das entlang einer Fahrstrecke 2 auf dem Betonboden fährt, bestimmt mittels des Sensors 3 das Signal der Armierung 1 als Funktion der Position auf der Fahrstrecke 2. Jede Fahrstrecke 2 weist aufgrund einer unregelmäßigen Anordnung der Armierung 1 im Betonboden ein charakteristisches Profil 7 auf. Dieses Profil 7 wird mittels einzelner Messpunkte 6 entlang der Fahrstrecke 2 bestimmt.

Für den Anwendungsfall, dass das Fahrzeug 3 wiederholt die gleiche Fahrstrecke 2 fahren soll, führt das Fahrzeug 3 eine Referenzfahrt durch und bestimmt entlang der gesamten Fahrstrecke 2 Messpunkte 6. Mittels der Messpunkte 6 der Referenzfahrt wird ein Referenzprofil 8 bestimmt. Das Referenzprofil 8 gibt für jede Position x auf der Fahrstrecke eine Intensität I des Signals von der Armierung 1 an.

Vorzugsweise fährt das Fahrzeug 3 mit einer konstanten Geschwindigkeit.

Zur Bestimmung der Position des Fahrzeugs 3 auf der Fahrstrecke 2 werden mittels des Sensors Messpunkte eines Profilabschnitts 9 bestimmt. Dieser Profilabschnitt 9 wird von dem Auswertemittel 5 mit dem Referenzprofil 8 verglichen, insbesondere mittels eines Korrelationsverfahrens. Stimmt der Profilabschnitt 9 mit einem Abschnitt des Referenzprofils 8 eindeutig überein, so ist jeder Messpunkt des Profilabschnitts 9 einer Position auf der Fahrstrecke 1 eindeutig, insbesondere eineindeutig, zuordenbar.

Die aktuelle Position des Fahrzeugs 3 wird bestimmt durch den Vergleich eines aktuellen Messpunktes mit dem Profilabschnitt 9 und dem zugeordneten Abschnitt des Referenzprofils 8.

Weist der Profilabschnitt 9 zu wenige Messpunkte auf, so ist der Profilabschnitt 9 dem Referenzprofil nicht eindeutig, insbesondere eineindeutig, zuordenbar. Somit ist auch dem Fahrzeug 3 keine Position eindeutig zuordenbar.

In einem weiteren nicht dargestellten Ausführungsbeispiel weist das System stationär angeordnete Sendemodule auf, die entlang der Fahrstrecke 2 angeordnet sind. Die stationär angeordneten Sendemodule sind oberhalb des Fahrzeugs 3 angeordnet, insbesondere an einem Mast oder an der Oberseite des Innenraums einer das System aufnehmenden Halle, insbesondere einer Produktionshalle, insbesondere an der Decke der Halle.

Das Fahrzeug 3 weist ein Empfangsmodul auf, vorzugsweise ist das Empfangsmodul an einer Oberseite des Fahrzeugs 3 angeordnet.

Jedes stationär angeordnete Sendemodul weist einen Sendekegel auf, der sich von dem stationär angeordneten Sendemodul zu dem Betonboden erstreckt. Dabei ist das stationär angeordnete Sendemodul derart ausgerichtet, dass der Sendekegel vom Empfangsmodul des Fahrzeugs 3 detektierbar ist.

Jedes stationär angeordnete Sendemodul weist eine Lichtquelle, insbesondere eine Leuchtdiode, ein erstes Polarisationsfilter, eine Stromquelle und einen Wandler auf. Der Wandler ist mit einer zentralen Steuerung einer das System aufweisenden Anlage verbunden, insbesondere mittels eines Datenbusses. Das erste Polarisationsfilter ist vor der Lichtquelle angeordnet. Das erste Polarisationsfilter ist als lineares Polarisationsfilter ausgeführt, so dass von dem unpolarisierten Licht der Lichtquelle, das auf das erste Polarisationsfilter trifft, nur der linear polarisierte Anteil das erste Polarisationsfilter passiert.

Alternativ ist die Lichtquelle als Quelle linear polarisierten Lichts ausgeführt, insbesondere wobei das erste Polarisationsfilter in die Lichtquelle integriert ist.

Die Steuerung sendet einen Steuerbefehl an den Wandler, der die Stromquelle der Lichtquelle derart ansteuert, dass die Lichtquelle moduliertes Licht abstrahlt. Dabei wird die Intensität des Lichtes moduliert. Das modulierte Licht weist den Steuerbefehl und eine Identitätsinformation des stationär angeordneten Sendemoduls auf.

Jedes stationär angeordnete Sendemodul weist eine jeweilige Identitätsinformation auf, die auf das Licht der jeweiligen Lichtquelle aufmoduliert übertragen wird. Somit ist dem Fahrzeug 3 ein zu dem jeweiligen Sendekegel zugeordneter Positionsbereich auf der Fahrstrecke 2 zuordenbar.

Vorzugsweise überlappen die Sendekegel von benachbarten stationär angeordneten Sendemodulen zumindest teilweise. Vorzugsweise ist die gesamte Fahrstrecke 2 mittels der stationär angeordneten Sendemodule beleuchtet, so dass überall auf der Fahrstrecke 2 das Fahrzeug 3 vom Licht mindestens eines stationär angeordneten Sendemoduls beleuchtet ist.

Die Lichtquelle erzeugt sichtbares Licht oder Infrarotlicht.

Das Empfangsmodul weist einen Lichtsensor, insbesondere eine Photodiode, ein zweites Polarisationsfilter, einen Flüssigkristall, einen Empfänger, das Auswertemittel 5 und ein Steuerungsmittel für den Flüssigkristall auf.

Vor dem Lichtsensor sind der Flüssigkristall und das zweite Polarisationsfilter angeordnet, wobei das zweite Polarisationsfilter zwischen dem Flüssigkristall und dem Lichtsensor angeordnet ist.

Der Flüssigkristall ist mittels des Steuerungsmittels ansteuerbar derart, dass die Polarisation von linear polarisiertem Licht um 0° oder 90° drehbar ist. Dazu wird von dem Steuerungsmittel eine Spannung an den Flüssigkristall angelegt, die die Moleküle des Flüssigkristalls ausrichtet. Abhängig von der an den Flüssigkristall angelegten Spannung wird die Polarisation des auf den Flüssigkristall auftreffenden Lichts um 0° oder um 90° gedreht. Das zweite Polarisationsfilter ist als lineares Polarisationsfilter ausgeführt, so dass nur der Anteil des linear polarisierten Lichts, das den Flüssigkristall passiert hat, der parallel zum zweiten Polarisationsfilter polarisiert ist, das zweite Polarisationsfilter passiert.

Der Lichtsensor erzeugt ein zu der Intensität des auftreffenden Lichtes proportionales Signal, insbesondere einen elektrischen Strom, das von dem Empfänger gemessen wird. Der Empfänger ist mit dem Auswertemittel 5 verbunden. Das Auswertemittel 5 bestimmt aus der Lichtintensität in Abhängigkeit von der Einstellung des Flüssigkristalls die Ausrichtung des Empfangsmoduls, insbesondere des Fahrzeugs 3, relativ zur Erstreckungsrichtung der Fahrstrecke 2 im Sendekegel des jeweiligen stationär angeordneten Sendemoduls.

Dazu wertet das Auswertemittel 5 auch die auf das Licht aufmodulierte Identitätsinformation des Sendemoduls und/oder den Steuerbefehl aus.

Dazu weist das Auswertemittel 5 eine Speichereinheit auf, in der die jeweilige Identitätsinformation und der der jeweiligen Identitätsinformation zugeordnete jeweilige Positionsbereich gespeichert sind.

Die Ausrichtung des Fahrzeugs 3 auf dem Betonboden ist durch einen Verdrehwinkel $\alpha$ gekennzeichnet. Der Verdrehwinkel $\alpha$ wird relativ zur Erstreckungsrichtung der Fahrstrecke 2 bestimmt.

Der Verdrehwinkel $\alpha$ zwischen dem Fahrzeug 3 und der Fahrstrecke 2 wird aus zwei Messungen bestimmt. Bei der ersten Messung wird das den Flüssigkristall durchlaufende linear polarisierte Licht vom Flüssigkristall um 90° gedreht und bei der zweiten Messung passiert das auf den Flüssigkristall treffende Licht den Flüssigkristall unverdreht.

Bei der ersten Messung fällt das unpolarisierte Licht der Lichtquelle auf das erste Polarisationsfilter, so dass linear polarisiertes Licht das erste Polarisationsfilter passiert. Dieses Licht fällt auf den Flüssigkristall. Bei der ersten Messung ist der Flüssigkristall derart von dem Steuerungsmittel angesteuert, dass die Polarisierung des linear polarisierten Lichtes um 90° gedreht wird. Dieses Licht fällt auf das zweite Polarisationsfilter, wobei nur der Anteil des Lichtes, der parallel zu dem zweiten Polarisationsfilter polarisiert ist, das zweite Polarisationsfilter passiert und vom Lichtsensor erfasst wird.

Bei der zweiten Messung fällt das unpolarisierte Licht der Lichtquelle auf das erste Polarisationsfilter, so dass linear polarisiertes Licht das erste Polarisationsfilter passiert, Dieses Licht fällt auf den Flüssigkristall. Bei der zweiten Messung ist der Flüssigkristall derart von dem Steuerungsmittel angesteuert, dass die Polarisierung des linear polarisierten Lichtes um 0° gedreht wird. Bei der zweiten Messung passiert das Licht den Flüssigkristall unverdreht. Dieses Licht fällt auf das zweite Polarisationsfilter, wobei nur der Anteil des Lichtes, der parallel zu dem zweiten Polarisationsfilter polarisiert ist, das zweite Polarisationsfilter passiert und vom Lichtsensor erfasst wird.

Der Winkelversatz $\alpha$ zwischen dem Fahrzeug 3 und der Erstreckungsrichtung der Fahrstrecke 2 wird von dem Auswertemittel 5 aus der in der ersten Messung

gemessenen Intensität $I_1$ und der in der zweiten Messung gemessenen Intensität $I_2$ wie folgt berechnet:

$$\alpha = \arctan \frac{I_1}{I_2}$$

Das Fahrzeug 3 weist eine Fahrzeugsteuerung zur Steuerung des Fahrzeugs 3 auf. Die Fahrzeugsteuerung ist mit dem Auswertemittel 5 verbunden. Das Auswertemittel 5 überträgt die ausgewertete aktuelle Ausrichtung des Fahrzeugs 3 an die Fahrzeugsteuerung, die die aktuelle Ausrichtung zur Steuerung der Fahrtrichtung des Fahrzeugs 3 verwendet.

Vorzugsweise ist das Fahrzeug 3 als fahrerloses Transportfahrzeug ausgeführt. Dabei wird die Fahrzeugsteuerung zur Steuerung des fahrerlosen Transportfahrzeugs verwendet.

Die erste Messung und die zweite Messung erfolgen zeitlich nacheinander. Dabei wird die Zeitspanne zwischen der ersten Messung und der zweiten Messung möglichst kurz gewählt.

In einem weiteren nicht dargestellten Ausführungsbeispiel weist das Fahrzeug 3 sowohl das Empfangsmodul als auch ein weiteres Sendemodul auf. Neben dem jeweiligen stationär angeordneten Sendemodul ist ein jeweiliges stationär angeordnetes Empfangsmodul angeordnet, das zu der Verfahrfläche hin ausgerichtet ist. Dabei ist das weitere Sendemodul gleichartig zu den stationär angeordneten Sendemodulen. Das jeweilige stationär angeordnete Empfangsmodul ist gleichartig zum Empfangsmodul.

Somit ist eine bidirektionale Kommunikation zwischen dem Fahrzeug 3 und der Steuerung der Anlage ermöglicht mittels der Sendemodule und Empfangsmodule. Beispielsweise sind der von dem Fahrzeug bestimmten Positionswert und/oder die Ausrichtung an das jeweilige stationär angeordnete Empfangsmodul übertragbar.

Vorzugsweise ist das stationär angeordnete Empfangsmodul ebenfalls zur Bestimmung der Ausrichtung des Fahrzeugs 3 eingerichtet. Die von dem Fahrzeug 3 bestimmte Ausrichtung und die von dem stationär angeordneten Empfangsmodul bestimmte Ausrichtung sind von der Steuerung vergleichbar, so dass die Messgenauigkeit durch Mittelwertbildung verbessert ist.

Somit ist eine Abweichung des Fahrzeugs 3 von der Fahrstrecke 2 erkennbar und die Fahrtrichtung des Fahrzeugs 3 korrigierbar.

## Bezugszeichenliste

1 Armierungsstahl
2 Fahrstrecke
3 Fahrzeug
4 Sensor
5 Auswertemittel
6 Messpunkt
7 Profil
8 Referenzprofil
9 Profilabschnitt

I Intensität
X Position

## Patentansprüche

1. Verfahren zur Positionserfassung eines Fahrzeugs (3) entlang einer Fahrstrecke (2), wobei die Fahrstrecke (2) auf einem Betonboden angeordnet ist, wobei der Betonboden eine Armierung (1), insbesondere also Bewehrung, aufweist, aufweisend die zeitlich aufeinander folgenden Verfahrensschritte:

   wobei in einem ersten Verfahrensschritt das Fahrzeug (3) eine Referenzfahrt entlang der Fahrstrecke (2) ausführt, wobei das Fahrzeug (3) entlang der Fahrstrecke (2) Messpunkte (6) aufnimmt, wobei jeder Messpunkt (6) einer Position auf der Fahrstrecke (2) ein Signal der Armierung (1) zuordnet,
   wobei in einem zweiten Verfahrensschritt aus den während der Referenzfahrt ermittelten Messpunkten (6) ein Referenzprofil (8) der Fahrstrecke (2) bestimmt wird, insbesondere durch Interpolation,
   **dadurch gekennzeichnet, dass**
   in einem dritten Verfahrensschritt das Fahrzeug (3), während einer weiteren Fahrt, entlang der Fahrstrecke (2) fährt und weitere Messpunkte aufnimmt,
   wobei in einem vierten Verfahrensschritt aus den weiteren Messpunkten ein Profilabschnitt (9) durch Interpolation bestimmt wird,
   wobei in einem fünften Verfahrensschritt der Profilabschnitt (9) einem Abschnitt des Referenzprofils (8) mittels eines Korrelationsverfahrens eindeutig zugeordnet wird, mittels Bestimmung eines Maximums des auf die Korrelation zwischen dem Profilabschnitt (9) und dem Abschnitt des Referenzprofils (8) bezogenen Korrelationsintegrals,
   wobei in einem sechsten Verfahrensschritt mittels des dem Referenzprofil (8) zugeordneten Profilabschnitts (9) dem Fahrzeug (3) eine Position auf der Fahrstrecke (2) eindeutig zugeordnet wird.

2. Verfahren zur Positionserfassung nach Anspruch 1, **dadurch gekennzeichnet, dass**

im sechsten Verfahrensschritt dem Profilabschnitt (9) ein Positionsbereich des Referenzprofils (8) zugeordnet wird,

wobei die Position des Fahrzeugs (3) relativ zum Profilabschnitt (9) bestimmt wird,

wobei aus dem Positionsbereich und der Position des Fahrzeugs (3) relativ zum Profilabschnitt (9) die Position des Fahrzeugs (3) auf der Fahrstrecke (2) bestimmt wird.

3. Verfahren zur Positionserfassung nach mindestens einem der vorangegangenen Ansprüche, **dadurch gekennzeichnet, dass** zur Bestimmung des Signals der Armierung (1) mittels einer Radarmessung und/oder eines induktiven Sensors die Tiefe und/oder Dichte und/oder Dicke der Armierung (1) im Betonboden bestimmt wird.

4. Verfahren zur Positionserfassung nach mindestens einem der vorangegangenen Ansprüche, **dadurch gekennzeichnet, dass** das Referenzprofil (8) jeder Position auf der Fahrstrecke (2) einen Wert des Signals der Armierung (1) eindeutig zuordnet.

5. Verfahren zur Positionserfassung nach mindestens einem der vorangegangenen Ansprüche, **dadurch gekennzeichnet, dass** die Ausrichtung des Fahrzeugs (3) relativ zur Erstreckungsrichtung der Fahrstrecke (2) an einer Position bestimmt wird,

wobei in einer ersten Messung, linear polarisiertes Licht eines stationär angeordneten Sendemoduls einen Flüssigkristall durchläuft, wobei dieser derart angesteuert wird, dass die Polarisation des Lichtes um einen ersten Winkel gedreht wird, wobei das Licht zumindest teilweise ein zweites Polarisationsfilter des Fahrzeugs (3) passiert und die Intensität $I_1$ des Lichts bestimmt wird,

wobei in einer zweiten Messung, linear polarisiertes Licht des stationär angeordneten Sendemoduls den Flüssigkristall durchläuft, wobei dieser derart angesteuert wird, dass die Polarisation des Lichtes um einen zweiten Winkel gedreht wird, wobei das Licht zumindest teilweise das zweite Polarisationsfilter passiert und die Intensität $I_2$ des Lichts bestimmt wird,

wobei aus den Intensitäten $I_1$ und $I_2$ die Ausrichtung des Fahrzeugs (3) relativ zur Erstreckungsrichtung der Fahrstrecke (2) bestimmt wird,

wobei der erste Winkel und der zweite Winkel ungleich sind, insbesondere wobei der erste Winkel und der zweite Winkel sich betragsmäßig um 90° unterscheiden oder sich betragsmäßig um einen Wert zwischen 80° und 100° unterscheiden.

6. System zur Positionserfassung eines Fahrzeugs (3) entlang einer Fahrstrecke mittels eines Verfahrens zur Positionserfassung nach mindestens einem der Ansprüche 1 bis 5, **dadurch gekennzeichnet, dass** das System das Fahrzeug (3), die Fahrstrecke (2) und einen Betonboden aufweist, wobei die Fahrstrecke (2) auf dem Betonboden angeordnet ist,

wobei der Betonboden eine Armierung (1) aufweist, wobei das Fahrzeug (3) einen Sensor (4) zur Messung eines Signals der Armierung (1) und ein Auswertemittel (5) aufweist,

wobei das System stationär angeordnete Sendemodule aufweist, die entlang der Fahrstrecke (2) angeordnet sind, insbesondere die oberhalb des Fahrzeuges (3) angeordnet sind,

wobei das Fahrzeug (3) ein Empfangsmodul aufweist, insbesondere wobei das Empfangsmodul an der Oberseite des Fahrzeugs (3) angeordnet ist,

wobei jedes Sendemodul eine Lichtquelle, insbesondere eine Leuchtdiode, und ein erstes Polarisationsfilter aufweist, wobei das erste Polarisationsfilter als lineares Polarisationsfilter ausgeführt ist, so dass linear polarisiertes Licht vom Sendemodul aussendbar ist,

wobei das Empfangsmodul einen Lichtsensor, einen Flüssigkristall, ein Steuerungsmittel für den Flüssigkristall und einen zweiten Polarisationsfilter aufweist, wobei das zweite Polarisationsfilter als lineares Polarisationsfilter ausgeführt ist,

wobei das zweite Polarisationsfilter zwischen dem Lichtsensor und dem Flüssigkristall angeordnet ist,

wobei der Flüssigkristall mittels des Steuerungsmittels derart ansteuerbar ist, dass die Polarisation von dem den Flüssigkristall passierenden linear polarisierten Licht um einen ersten Winkel oder um einen zweiten Winkel, insbesondere um 0° oder um 90°, gedreht wird, wobei der erste Winkel und der zweite Winkel ungleich sind,

wobei Licht von der Lichtquelle, welches das erste Polarisationsfilter, dann den Flüssigkristall und dann das zweite Polarisationsfilter durchlaufen hat, mittels des Lichtsensors detektierbar ist.

7. System zur Positionserfassung nach Anspruch 6, **dadurch gekennzeichnet, dass** der Sensor (4) an einem Fahrzeugboden des Fahrzeugs (5) angeordnet ist, und/oder dass der Sensor (4) mit dem Auswertemittel (5) verbunden ist, insbesondere elektrisch leitend verbunden ist.

8. System zur Positionserfassung nach mindestens einem der Ansprüche 6 oder 7, **dadurch gekennzeichnet, dass** der Sensor (4) ein Radarsensor und/oder ein induktiver Sensor ist, der dazu eingerichtet ist die Dicke und/oder die Dichte und/oder die Tiefe der Armierung (1) im Betonboden zu bestimmen.

9. System zur Positionserfassung nach mindestens einem der Ansprüche 6 bis 8,
**dadurch gekennzeichnet, dass**
das Fahrzeug (3) eine Fahrzeugsteuerung aufweist, insbesondere wobei das Fahrzeug (3) als fahrerloses Transportfahrzeug ausgeführt ist, wobei die Fahrzeugsteuerung mit dem Auswertemittel (5) verbunden ist.

10. System zur Positionserfassung nach mindestens einem der Ansprüche 6 bis 9,
**dadurch gekennzeichnet, dass**
die Lichtquelle intensitätsmoduliertes Licht erzeugt, insbesondere mit einer Frequenz zwischen 100 kHz und 10 MHz,
und/oder
dass das verwendete Licht sichtbares Licht oder Infrarotlicht ist.

11. System zur Positionserfassung nach mindestens einem der Ansprüche 6 bis 10,
**dadurch gekennzeichnet, dass**
das Empfangsmodul einen Empfänger aufweist, der mit dem Auswertemittel (5) verbunden ist, wobei der Empfänger eingerichtet ist, ein Signal des Lichtsensors, insbesondere einen Strom, zu messen,
wobei das Auswertemittel (5) eingerichtet ist, aus zwei Messwerten des Lichtsensors die Ausrichtung des Fahrzeugs (3) relativ zur Erstreckungsrichtung der Fahrstrecke (2) zu bestimmen, insbesondere wobei die Fahrzeugsteuerung eingerichtet ist, die von dem Auswertemittel (5) bestimmte Ausrichtung des Fahrzeugs (3) zur Steuerung des Fahrzeugs (3) zu verwenden.

12. System zur Positionserfassung nach mindestens einem der Ansprüche 6 bis 11,
**dadurch gekennzeichnet, dass**
jedes stationär angeordnete Sendemodul eine Identitätsinformation aufweist, die auf das Licht des jeweiligen stationär angeordneten Sendemoduls aufmodulierbar ist,
wobei jedem stationär angeordneten Sendemodul ein Positionsbereich entlang der Fahrstrecke (2) eindeutig zuordenbar ist mittels der Identitätsinformation,
insbesondere wobei das System eine Speichereinheit aufweist, in der die jeweiligen Positionsbereiche der jeweiligen Identitätsinformation zugeordnet gespeichert sind, wobei die Speichereinheit auslesbar ist von dem Auswertemittel (5).

13. System zur Positionserfassung nach mindestens einem der Ansprüche 6 bis 12,
**dadurch gekennzeichnet, dass**
jedes stationär angeordnete Sendemodul einen jeweiligen Sendekegel aufweist,
insbesondere wobei die Sendekegel von benachbarten stationär angeordneten Sendemodulen zumindest teilweise überlappen,
und/oder wobei die gesamte Fahrstrecke (2) mittels der stationär angeordneten Sendemodule beleuchtet ist, insbesondere als Beleuchtung der Fahrstrecke (2).

14. System zur Positionserfassung nach mindestens einem der Ansprüche 6 bis 13,
**dadurch gekennzeichnet, dass**
das System ein dem jeweiligen stationär angeordneten Sendemodul zugeordnetes jeweiliges stationär angeordnetes Empfangsmodul aufweist, wobei das stationär angeordnete Empfangsmodul und das Empfangsmodul des Fahrzeugs (3) gleichartig sind, wobei das Fahrzeug (3) ein Sendemodul aufweist, wobei das Sendemodul des Fahrzeugs und das stationär angeordnete Sendemodul gleichartig sind, wobei das stationär angeordnete Empfangsmodul eingerichtet ist, Licht des Sendemoduls des Fahrzeugs (3) zu empfangen,
insbesondere wobei mittels der Sendemodule und Empfangsmodule eine bidirektionale Datenübertragung zwischen dem Fahrzeug (3) und einer zentralen Steuerung ausführbar ist.

**Claims**

1. Method for detecting the position of a vehicle (3) along a route (2), wherein the route (2) is arranged on a concrete floor, wherein the concrete floor has a reinforcement (1), that is to say in particular an armouring,
comprising the temporally successive method steps:

wherein, in a first method step, the vehicle (3) carries out a reference journey along the route (2), wherein the vehicle (3) records measurement points (6) along the route (2), wherein each measurement point (6) associates a signal from the reinforcement (1) with a position on the route (2),
wherein, in a second method step, a reference profile (8) of the route (2) is determined, in particular by interpolation, from the measurement points (6) ascertained during the reference journey,
**characterized in that**,
in a third method step, the vehicle (3) drives along the route (2) during a further journey and records further measurement points,
wherein, in a fourth method step, a profile section (9) is determined from the further measurement points by interpolation, wherein, in a fifth method step, the profile section (9) is unequivocally associated with a section of the reference profile (8) by means of a correlation process by determining a maximum of the correlation integral relating to the correlation between the profile section (9) and the section of the reference profile (8),

wherein, in a sixth method step, a position on the route (2) is unequivocally associated with the vehicle (3) by means of the profile section (9) associated with the reference profile (8).

2. Method for position detection according to claim 1, **characterized in that**,

in the sixth method step, a position range of the reference profile (8) is associated with the profile section (9), wherein the position of the vehicle (3) relative to the profile section (9) is determined,

wherein the position of the vehicle (3) on the route (2) is determined from the position range and the position of the vehicle (3) relative to the profile section (9).

3. Method for position detection according to at least one of the preceding claims, **characterized in that**,

in order to determine the signal from the reinforcement (1), the depth and/or density and/or thickness of the reinforcement (1) in the concrete floor is determined by means of a radar measurement and/or an inductive sensor.

4. Method for position detection according to at least one of the preceding claims, **characterized in that**

the reference profile (8) unequivocally associates a value of the signal from the reinforcement (1) with each position on the route (2).

5. Method for position detection according to at least one of the preceding claims, **characterized in that**

the orientation of the vehicle (3) relative to the direction of extension of the route (2) is determined at a position, wherein, in a first measurement, linearly polarized light from a stationarily arranged transmitting module passes through a liquid crystal, the latter being controlled in such a way that the polarization of the light is rotated through a first angle, wherein at least some of the light passes through a second polarization filter of the vehicle (3) and the intensity $I_1$ of the light is determined,

wherein, in a second measurement, linearly polarized light from the stationarily arranged transmitting module passes through the liquid crystal, the latter being controlled in such a way that the polarization of the light is rotated through a second angle, wherein at least some of the light passes through the second polarization filter and the intensity $I_2$ of the light is determined,

wherein the orientation of the vehicle (3) relative to the direction of extension of the route (2) is determined from the intensities $I_1$ and $I_2$,

wherein the first angle and the second angle are unequal, in particular wherein the first angle and the second angle differ in magnitude by 90° or differ in magnitude by a value between 80° and 100°.

6. System for detecting the position of a vehicle (3) along a route by means of a method for position detection according to at least one of claims 1 to 5, **characterized in that**

the system comprises the vehicle (3), the route (2) and a concrete floor, the route (2) being arranged on the concrete floor,

wherein the concrete floor has a reinforcement (1), wherein the vehicle (3) has a sensor (4) for measuring a signal from the reinforcement (1) and has an evaluation means (5), wherein the system has stationarily arranged transmitting modules which are arranged along the route (2), in particular which are arranged above the vehicle (3),

wherein the vehicle (3) has a receiving module, in particular wherein the receiving module is arranged on the top of the vehicle (3),

wherein each transmitting module has a light source, in particular a light-emitting diode, and a first polarization filter, wherein the first polarization filter is configured as a linear polarization filter so that linearly polarized light can be emitted from the transmitting module,

wherein the receiving module has a light sensor, a liquid crystal, a control means for the liquid crystal, and a second polarization filter, wherein the second polarization filter is configured as a linear polarization filter,

wherein the second polarization filter is arranged between the light sensor and the liquid crystal,

wherein the liquid crystal can be controlled by the control means in such a way that the polarization of the linearly polarized light passing through the liquid crystal is rotated through a first angle or through a second angle, in particular through 0° or through 90°, wherein the first angle and the second angle are unequal,

wherein light from the light source that has passed through the first polarization filter, then the liquid crystal and then the second polarization filter can be detected by means of the light sensor.

7. System for position detection according to claim 6, **characterized in that**

the sensor (4) is arranged on a vehicle bottom of the vehicle (5),

and/or **in that**

the sensor (4) is connected to the evaluation means (5), is particular is electrically conductively connected thereto.

8. System for position detection according to at least one of claims 6 or 7,
**characterized in that**
the sensor (4) is a radar sensor and/or an inductive sensor which is configured to determine the thickness and/or the density and/or the depth of the reinforcement (1) in the concrete floor.

9. System for position detection according to at least one of claims 6 to 8,
**characterized in that**
the vehicle (3) has a vehicle controller, in particular wherein the vehicle (3) is configured as a driverless transport vehicle, wherein the vehicle controller is connected to the evaluation means (5).

10. System for position detection according to at least one of claims 6 to 9,
**characterized in that**
the light source generates intensity-modulated light, in particular having a frequency between 100 kHz and 10 MHz, and/or
**in that** the light used is visible light or infrared light.

11. System for position detection according to at least one of claims 6 to 10,
**characterized in that**
the receiving module has a receiver which is connected to the evaluation means (5),
wherein the receiver is configured to measure a signal from the light sensor, in particular a current,
wherein the evaluation means (5) is configured to determine, from two measured values from the light sensor, an orientation of the vehicle (3) relative to the direction of extension of the route (2),
in particular wherein the vehicle controller is configured to use the orientation of the vehicle (3), determined by the evaluation means (5), to control the vehicle (3).

12. System for position detection according to at least one of claims 6 to 11,
**characterized in that**
each stationarily arranged transmitting module has identity information that can be modulated onto the light of the respective stationarily arranged transmitting module,
wherein a position range along the route (2) can be unequivocally associated with each stationarily arranged transmitting module by means of the identity information,
in particular wherein the system has a memory unit, in which the respective position ranges are stored in a manner associated with the respective identity information, wherein the memory unit can be read by the evaluation means (5).

13. System for position detection according to at least one of claims 6 to 12,
**characterized in that**
each stationarily arranged transmitting module has a respective transmission cone,
in particular wherein the transmission cones of adjacent stationarily arranged transmitting modules at least partially overlap,
and/or wherein the entire route (2) is illuminated by means of the stationarily arranged transmitting modules, in particular as illumination of the route (2).

14. System for position detection according to at least one of claims 6 to 13,
**characterized in that**
the system has a respective stationarily arranged receiving module associated with the respective stationarily arranged transmitting module, wherein the stationarily arranged receiving module and the receiving module of the vehicle (3) are of the same type,
wherein the vehicle (3) has a transmitting module, wherein the transmitting module of the vehicle and the stationarily arranged transmitting module are of the same type,
wherein the stationarily arranged receiving module is configured to receive light from the transmitting module of the vehicle (3),
in particular wherein a bidirectional data transfer between the vehicle (3) and a central controller can be executed by means of the transmitting modules and receiving modules.

**Revendications**

1. Procédé de détection d'emplacements occupés par un véhicule (3) le long d'un trajet de déplacement (2), lequel trajet de déplacement (2) est situé sur un sol en béton, lequel sol en béton est pourvu d'un renforcement (1), c'est-à-dire d'une armature en particulier,
incluant les étapes opératoires se succédant dans le temps et consistant en ce que :

lors d'une première étape opératoire, le véhicule (3) accomplit une course de référence le long du trajet de déplacement (2), ledit véhicule (3) recueillant alors des points de mesure (6) le long du trajet de déplacement (2), chaque point de mesure (6) attribuant un signal du renforcement (1) à un emplacement situé sur ledit trajet de déplacement (2),
lors d'une deuxième étape opératoire, un profil de référence (8) dudit trajet de déplacement (2) est déterminé, notamment par interpolation, sur la base des points de mesure (6) spécifiés durant ladite course de référence,
**caractérisé par le fait que,**

lors d'une troisième étape opératoire, le véhicule (3) se déplace le long du trajet de déplacement (2) durant une course supplémentaire, et recueille des points de mesure supplémentaires, sachant que, lors d'une quatrième étape opératoire, un segment de profil (9) est déterminé par interpolation sur la base desdits points de mesure supplémentaires, sachant que, lors d'une cinquième étape opératoire, ledit segment de profil (9) est affecté de manière univoque, au moyen d'un procédé de corrélation, à un segment du profil de référence (8), par détermination d'un maximum de l'intégrale corrélative se rapportant à la corrélation entre ledit segment de profil (9) et ledit segment du profil de référence (8), sachant que, lors d'une sixième étape opératoire, un emplacement situé sur ledit trajet de déplacement (2) est attribué audit véhicule (3), de manière univoque, au moyen dudit segment de profil (9) affecté audit segment du profil de référence (8).

2. Procédé de détection d'emplacements, selon la revendication 1,
   **caractérisé par le fait que**,
   lors de la sixième étape opératoire, une plage d'emplacements du profil de référence (8) est attribuée au segment de profil (9),
   l'emplacement du véhicule (3) étant déterminé par rapport audit segment de profil (9),
   sachant que l'emplacement du véhicule (3), sur le trajet de déplacement (2), est déterminé sur la base de ladite plage d'emplacements et de l'emplacement dudit véhicule (3) par rapport audit segment de profil (9).

3. Procédé de détection d'emplacements, selon au moins l'une des revendications précédentes,
   **caractérisé par le fait que**
   la profondeur et/ou la densité et/ou l'épaisseur du renforcement (1), dans le sol en béton, est (sont) déterminée(s) en vue de la détermination du signal dudit renforcement (1) au moyen d'une mesure par radar et/ou d'un capteur inductif.

4. Procédé de détection d'emplacements, selon au moins l'une des revendications précédentes,
   **caractérisé par le fait que**
   le profil de référence (8) attribue, de manière univoque, une valeur du signal du renforcement (1) à chaque emplacement situé sur le trajet de déplacement (2).

5. Procédé de détection d'emplacements, selon au moins l'une des revendications précédentes,
   **caractérisé par le fait que**
   l'orientation du véhicule (3), par rapport à la direction de l'étendue du trajet de déplacement (2), est déterminée en un emplacement,
sachant que, lors d'une première mesure, de la lumière polarisée linéairement, émanant d'un module d'émission à implantation stationnaire, traverse un cristal liquide, ce dernier étant piloté de façon telle que la polarisation de la lumière soit déroutée d'un premier angle, la lumière franchissant au moins partiellement un second filtre de polarisation dudit véhicule (3), et l'intensité $I_1$ de ladite lumière étant déterminée,
sachant que, lors d'une seconde mesure, de la lumière polarisée linéairement, émanant dudit module d'émission à implantation stationnaire, traverse ledit cristal liquide, ce dernier étant piloté de façon telle que la polarisation de la lumière soit déroutée d'un second angle, la lumière franchissant au moins partiellement ledit second filtre de polarisation, et l'intensité $I_2$ de ladite lumière étant déterminée,
ladite orientation du véhicule (3), par rapport à ladite direction de l'étendue du trajet de déplacement (2), étant alors déterminée sur la base des intensités $I_1$ et $I_2$,
sachant que ledit premier angle et ledit second angle sont inégaux, les grandeurs dudit premier angle et dudit second angle présentant notamment une différence de 90°, ou bien lesdites grandeurs se différenciant d'une valeur comprise entre 80° et 100°.

6. Système de détection d'emplacements occupés par un véhicule (3) le long d'un trajet de déplacement, au moyen d'un procédé de détection d'emplacements conforme à au moins l'une des revendications 1 à 5,
   **caractérisé par le fait que**
   ledit système inclut le véhicule (3), le trajet de déplacement (2) et un sol en béton, ledit trajet de déplacement (2) étant situé sur ledit sol en béton,
   lequel sol en béton est pourvu d'un renforcement (1),
   ledit véhicule (3) étant muni d'un capteur (4) dévolu à la mesure d'un signal dudit renforcement (1), et d'un moyen d'évaluation (5),
   ledit système comportant des modules d'émission à implantation stationnaire qui sont disposés le long dudit trajet de déplacement (2) et se trouvent, en particulier, au-dessus dudit véhicule (3),
   lequel véhicule (3) est pourvu d'un module de réception, ledit module de réception étant notamment implanté à la face supérieure dudit véhicule (3),
   chaque module d'émission étant équipé d'une source lumineuse, en particulier d'une diode électroluminescente, et d'un premier filtre de polarisation, lequel premier filtre de polarisation est réalisé en tant que filtre de polarisation linéaire, de telle sorte que de la lumière polarisée linéairement puisse être émise par ledit module d'émission,
   ledit module de réception comprenant un capteur de lumière, un cristal liquide, un moyen de commande assigné audit cristal liquide, et un second filtre de polarisation, lequel second filtre de polarisation est réalisé en tant que filtre de polarisation linéaire, ledit second filtre de polarisation étant interposé entre ledit capteur de lumière et ledit cristal liquide, lequel cristal liquide peut être piloté, à l'aide dudit moyen de commande, de telle manière que la polarisation de la lumière polarisée linéairement, franchissant ledit cristal liquide, soit déroutée d'un premier angle ou d'un second angle, en particulier de 0° ou de 90°, ledit premier angle et ledit second angle étant inégaux, sachant que de la lumière émanant de la source lumineuse et ayant franchi ledit premier filtre de polarisation, puis ledit cristal liquide, puis ledit second filtre de polarisation, peut être détectée au moyen dudit capteur de lumière.

7. Système de détection d'emplacements, selon la revendication 6,
**caractérisé par le fait que**
le capteur (4) est installé sur un plancher du véhicule (3) ;
et/ou **par le fait que**
ledit capteur (4) est connecté au moyen d'évaluation (5), notamment connecté de manière électriquement conductrice.

8. Système de détection d'emplacements, selon au moins l'une des revendications 6 ou 7,
**caractérisé par le fait que**
le capteur (4) est un capteur radar et/ou un capteur inductif agencé de manière à déterminer l'épaisseur et/ou la densité et/ou la profondeur du renforcement (1) dans le sol en béton.

9. Système de détection d'emplacements, selon au moins l'une des revendications 6 à 8,
**caractérisé par le fait que**
le véhicule (3) est muni d'une commande, ledit véhicule (3) étant notamment réalisé sous la forme d'un véhicule de transport sans conducteur,
la commande dudit véhicule étant connectée au moyen d'évaluation (5).

10. Système de détection d'emplacements, selon au moins l'une des revendications 6 à 9,
**caractérisé par le fait que**
la source lumineuse engendre de la lumière à intensité modulée présentant, en particulier, une fréquence comprise entre 100 kHz et 10 MHz ;
et/ou **par le fait
que** la lumière utilisée est de la lumière visible ou de la lumière infrarouge.

11. Système de détection d'emplacements, selon au moins l'une des revendications 6 à 10,
**caractérisé par le fait que**
le module de réception est pourvu d'un récepteur connecté au moyen d'évaluation (5), ledit récepteur étant agencé de manière à mesurer un signal du capteur de lumière, notamment un courant, ledit moyen d'évaluation (5) étant agencé de manière à déterminer, sur la base de deux valeurs de mesure du capteur de lumière, l'orientation du véhicule (3) par rapport à la direction de l'étendue du trajet de déplacement (2),
sachant notamment que la commande du véhicule est agencée en vue d'utiliser, pour commander ledit véhicule (3), l'orientation dudit véhicule (3) déterminée par ledit moyen d'évaluation (5).

12. Système de détection d'emplacements, selon au moins l'une des revendications 6 à 11,
**caractérisé par le fait que**
chaque module d'émission à implantation stationnaire comporte une information d'identité pouvant être modulée sur la lumière du module d'émission considéré, à implantation stationnaire,
une plage d'emplacements situés le long du trajet de déplacement (2) pouvant être attribuée de manière univoque, au moyen de ladite information d'identité, à chaque module d'émission à implantation stationnaire,
ledit système étant notamment doté d'une unité de mémorisation dans laquelle les plages d'emplacements considérées sont mémorisés avec attribution à l'information d'identité respective, ladite unité de mémorisation pouvant être lue à l'aide du moyen d'évaluation (5).

13. Système de détection d'emplacements, selon au moins l'une des revendications 6 à 12,
**caractérisé par le fait que**
chaque module d'émission à implantation stationnaire est pourvu d'un cône émetteur respectif,
sachant, en particulier, que les cônes émetteurs de modules d'émission voisins à implantation stationnaire se chevauchent au moins en partie,
et/ou sachant que l'intégralité du trajet de déplacement (2) est éclairée au moyen desdits modules d'émission à implantation stationnaire, notamment en tant qu'éclairage dudit trajet de déplacement (2).

14. Système de détection d'emplacements, selon au moins l'une des revendications 6 à 13,
**caractérisé par le fait que**
ledit système comporte un module de réception respectif, à implantation stationnaire, affecté au module d'émission considéré à implantation stationnaire, ledit module de réception à implantation stationnaire, et le module de réception du véhicule (3), étant de types similaires,
lequel véhicule (3) est muni d'un module d'émission, ledit module d'émission du véhicule, et le module d'émission à implantation stationnaire, étant de types similaires, ledit module de réception, à implantation stationnaire, étant agencé pour recevoir de la lumière émanant dudit module d'émission dudit véhicule (3),

sachant notamment qu'une transmission bidirectionnelle de données, entre ledit véhicule (3) et une commande centrale, peut être effectuée au moyen desdits modules d'émission et modules de réception.

Fig. 1

Fig. 2

Fig. 3

EP 3 510 461 B1

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005008555 A1
- WO 2014065856 A1
- US 20100052971 A1
- DE 102013001358 A1
- DE 10008289 A1
- WO 9109356 A1